# EUROPEAN PATENT SPECIFICATION

(11) **EP 1 593 844 B1**
(45) Date of publication and mention of the grant of the patent: **21.06.2006**
(21) Application number: 04425314.4
(22) Date of filing: 03.05.2004
(51) Int. Cl.: F03G 7/06, A61B 1/005

(54) **Shape memory bistable actuator**
Bistabiler Schalter mit Formgedächtnismetall
Actuateur à mémoire de forme avec bistable opération

(43) Date of publication of application: 09.11.2005
(73) Proprietor: C.R.F. Società Consortile per Azioni, 10043 Orbassano (Torino) (IT)
(72) Inventor: Biasiotto, Marco, 10100 Torino (IT); Butera, Francesco, 10100 Torino (IT); Alacqua, Stefano, 10090 Rivoli Cascine Vica (Torino) (IT)
(74) Representative: Notaro, Giancarlo

(56) References cited:
- EP-A- 1 045 141
- WO-A-02/057627
- US-A- 4 887 430
- US-A- 4 965 545

## Description

The present invention generally relates to the shape memory actuators field.

Shape memory alloys have been developed and utilized since long in various fields. Such materials show the property of undergoing a transformation when their temperature varies above a transition value. By exploiting this property, shape memory actuators are used, for instance consisted of shape memory wires which, if warmed above the transition temperature, are subjected to a contraction. The heating is induced in some applications by passing through the wire an electric current, so as to warm it by the Joule effect.

The Applicant is the owner of various Patents and patent applications relating to different applications of shape memory actuators.

The present invention particularly relates to a shape memory actuator of a bistable type, i.e. of a type having two working positions between which it moves at every activation, the position every time reached being then stably held even after the actuator deactivation. In other words, in the actuators of this type, each following activation of the actuator causes its switching from a working condition to the other, and when the activation ends, the actuator remains in the position it has reached. Therefore, such actuators differ from monostable type actuators, wherein the actuator activation always causes the displacement of the actuator in one of the two working positions, whereas when the activation ends, the actuator always returns in the other working position.

The advantage of bistable actuators obviously resides in that, whatever the working condition in which the actuator is to be held, it is not necessary to consume energy (for example for supplying electric current through the shape memory wire) in order to hold it in such a position.

A shape memory actuator of a bistable type was already proposed by the Applicant in the European patent EP 1 241 351 B1. A shape memory bistable actuator of the type indicated in the pre-characterizing portion of claim 1 is known from US 4 965 545 A.

The aim of the present invention is to carry out a shape memory bistable actuator which has an extremely simple structure and is cheap, and at the same time is reliable in its working.

In view of obtaining this aim, the object of the invention is a shape memory bistable actuator, characterized in that it has the features of claim 1.

In the actuator according to the invention, the only purpose of the shape memory means is to bring the movable element to exceed its dead center position. Once this aim has been achieved, the displacement of the movable element till the new working position is determined by the spring, which also has the function of maintaining the new working position thus obtained after the deactivation of the shape memory means, as well as the function of being a part of the electric supply circuit.

Therefore, the actuator according to the invention is characterized by an excellent simplicity and operation reliability and by a reduced energy consumption.

Further features and advantages of the invention will result from the following description with reference to the enclosed drawings, which are given by way of example but not limitation, wherein:
- figure 1 is a diagrammatic view of a preferred embodiment of the actuator according to the invention, and
- figures 2, 3 show the actuator of figure 1 in two different working conditions.

In the drawings, numeral 1 generally shows a shape memory bistable actuator.

The actuator includes a fixed support structure 2 which is only shown diagrammatically in the drawings and may have any structure and shape. The actuator includes a movable element 3 in the form of a pulley rotatably mounted around an axis 4 on the fixed support structure 2. Around the pulley 3 a single shape memory wire 5 is returned, which has both its ends 5a, 5b secured to the fixed support structure 2 and is also rigidly secured to the pulley 3 in correspondence with a point 6. A coil spring 7 has one end 8 rigidly connected to the fixed support structure 2 at a point located on the vertical (in the drawing) passing through the axis of rotation 4, and the opposite end secured to the pulley 3, in correspondence with the same point 6 at which the shape memory wire 5 is secured.

Numeral 9 generally shows electrical supply means to the shape memory wire 5. These means include a first circuit 9a which includes a spring 7 and the part of the wire 5 which goes from the end 5a to the fixing point 6 of the pulley. The second circuit 9b still includes the spring 7 and the part of the wire 5 which goes from the fixing point 6 to the other end 5b of the wire. Numeral 10 diagrammatically shows an electric energy source and numeral 11 shows a switch which is able to activate the current passage through the first circuit 9a or through the second circuit 9b.

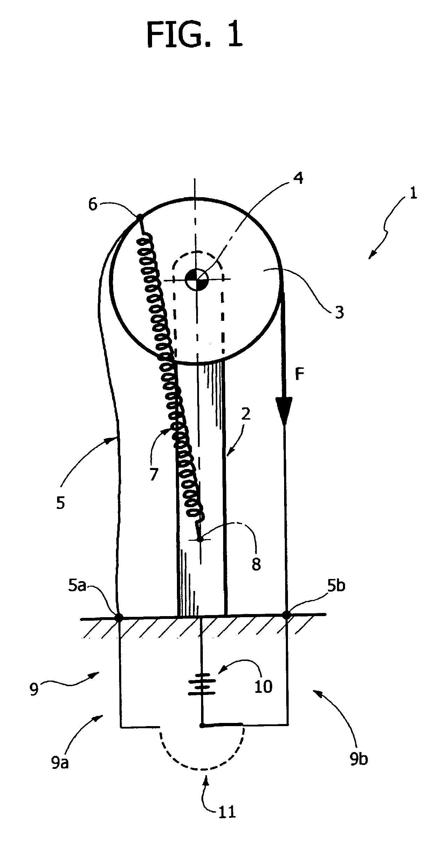

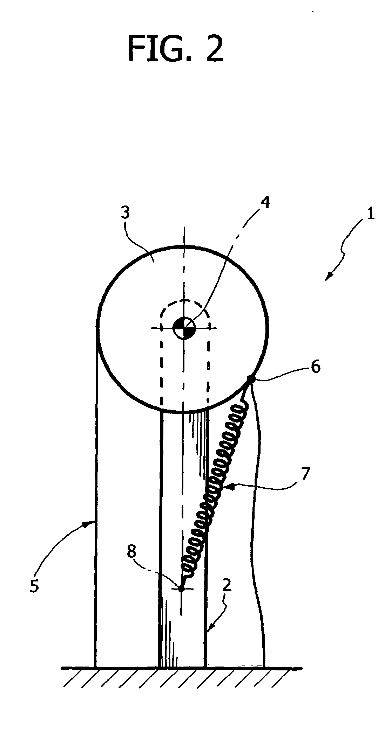

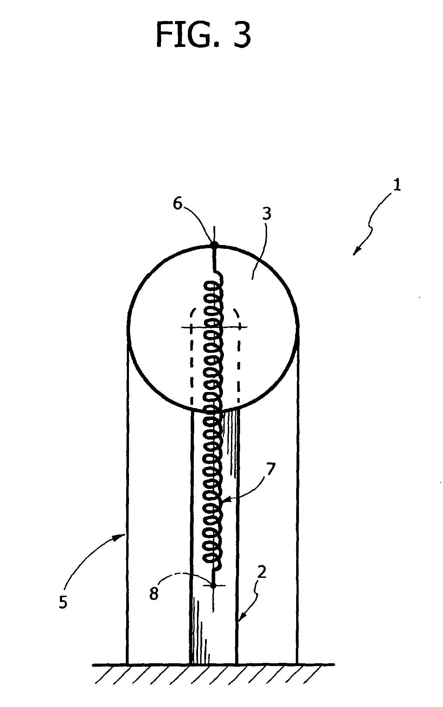

Figure 1 shows the actuator according to the invention in an intermediate phase of its functioning, wherein the circuit 9b has been activated. In such a phase, the part of the shape memory wire 5 between the fixing point 6 and the end 5b is subjected to contraction, because of the heating determined by the current passage. In this phase, the part of the wire 5 between the end 5a and the point 6 is instead loosened. Therefore, within the above phase, the shape memory wire applies a force F to the pulley 3 which tends to rotate it clockwise (with reference to the drawing). The activation of the circuit 9b proceeds up to immediately after the dead center position has been reached, as shown in figure 3. In this position, the ends 6, 8 of the spring 7 and the axis of rotation 4 are aligned therebetween. Therefore, while in the phase shown in figure 1 the contraction of the tract 6-5b of the wire 5 determines the clockwise rotation of the pulley 3 against the action of the spring 7, with the exceeding of the condition of figure 3, the activation of the circuit 9b can be stopped, as it is the spring 7 itself which tends to forward the clockwise rotation of the pulley 3. This rotation then continues until a working position of the end of the pulley 3, which is shown in figure 2, is obtained. Such a position may correspond to a non-deformed condition of the spring 7 or to the engagement of a surface of the pulley 3 against a corresponding fixed end surface (not shown), which avoids a further shortening of the spring 7. Once the working position, shown in figure 2, has been obtained, this position is held without any energy consumption, until the user wishes to switch the actuator in the opposite working condition. In this case, the switch 11 will be driven so as to supply electric current through the circuit 9a. This will determine the shortening of the tract of the wire 5a-6 with consequent clockwise rotation of the pulley 3 against the spring 7 action. The activation of the circuit 9a is continued up to immediately after the dead center position, shown in figure 3, is obtained, after which the spring 7 itself will forward the counterclockwise rotation of the pulley 3 until a specularly symmetrical position is obtained, with respect to that of figure 2. Again, this position will be held due to the same spring 7, without the need of any energy consumption.

The possible applications of the actuator according to the invention are different. Indeed, such actuator may be used wherever the displacement of a movable element is required (in the shown case, an oscillating element around an axis of rotation), between two end working positions.

This is the case, for example, of an air baffle for automotive conditioning systems, oscillating between two end working positions.

Obviously, without prejudice for the principle of the invention, construction details and embodiments could widely vary with respect to what has been described and shown by mere way of example, however without leaving the scope of the present invention.

For example, the movable element 3 could be an elastically deformable element so as to oscillate between two end working positions, and the spring means, which tend to return the movable element towards either end positions, depending on the fact that it is on either part of the dead center position, could also have of the same elasticity of the deformable element.

## Claims

1. shape memory bistable actuator, including an element (3) movably mounted on a support structure (2) and having an intermediate position of dead center and two end positions, and spring means (7) tending to return the movable element (3) towards either end positions, depending on that it is on either part with respect to the dead center position, and shape memory means (5, 9) for causing a displacement of the movable element (3) from either end positions, against the action of the above spring means (7) at least until the exceeding of the dead center position
wherein the elastic means consist of spring means (7) interposed between said movable element (3) and said fixed support structure (2)
wherein the movable element (3) is rotatably mounted around an axis of rotation (4) on the support structure (2), and the above spring means (7) consist of a coil spring having one end (8) connected to the support structure (2) at a point spaced apart from the axis of rotation (4) of the rotatable element (3), and the other end connected to the rotatable element (3) at a point (6) spaced apart from the axis of rotation (4)
wherein the shape memory means (5) include at least a shape memory wire and means (9) for supplying an electric current therethrough,
wherein the rotatable element (3) is in the form of a pulley and the shape memory wire (5) has both its ends (5a, 5b) connected to the fixed support structure (2) and it is deviated around the pulley element (3), said shape memory wire (5) further being rigidly connected to the rotatable element (3)
**characterized in that** the feed means (9) are suitable for selectively supplying electric current through a first circuit (9a), including the spring (7) and a first tract (5a-6) of the shape memory wire (5), and a second circuit (9b) including the same spring (7) and a second tract (6-5b) of the shape memory wire (5).

2. Bistable actuator according to claim 1, **characterized in that** said shape memory means include a plurality of shape memory wires arranged in parallel therebetween.

## Patentansprüche

1. Bistabiler Schalter mit Formgedächtnis, umfassend ein Element (3), das beweglich auf einer Stützstruktur (2) angebracht ist und eine genau mittige Zwischenposition und zwei Endpositionen aufweist, und eine Federvorrichtung (7), die dazu tendiert, das bewegliche Element (3) zu einer der Endpositionen zurück zu bringen, in Abhängigkeit davon, dass es sich auf einer der Seiten in Bezug auf die genau mittige Position befindet, und eine Formgedächtnisvorrichtung (5, 9), um eine Verschiebung des beweglichen Elements (3) von einer der Endpositionen zu bewirken, und zwar gegen die Wirkung der obigen Federvorrichtung (7), zumindest bis die genau mittige Position überwunden wird,
wobei das elastische Mittel aus einer Federvorrichtung (7) besteht, die zwischen das bewegliche Element (3) und die feste Stützstruktur (2) zwischengestellt ist,
wobei das bewegliche Element (3) drehbar um eine Drehachse (4) auf der Stützstruktur (2) befestigt ist, und die obige Federvorrichtung (7) aus einer Spiralfeder besteht, deren ein Ende (8) an einem von der Drehachse (4) des drehbaren Elements (3) beabstandeten Punkt mit der Stützstruktur (2) verbunden ist und deren anderes Ende an einem von der Drehachse (4) beabstandeten Punkt (6) mit dem drehbaren Element (3) verbunden ist,
wobei die Formgedächtnisvorrichtung (5) mindestens einen Formgedächtnisdraht sowie Mittel zum Zuführen eines elektrischen Stroms durch ihn umfasst,
wobei das drehbare Element (3) in der Form einer Rolle ist und der Formgedächtnisdraht (5) mit beiden Enden (5a, 5b) an der festen Stützstruktur (2) angeschlossen ist und um das Rollenelement (3) herum abgelenkt wird, wobei der Formgedächtnisdraht (5) weiter steif mit dem drehbaren Element (3) verbunden ist,
**dadurch gekennzeichnet, dass**
die Zuführvorrichtung (9) geeignet ist, um selektiv elektrischen Strom durch einen ersten Schaltkreis (9a), welcher die Feder (7) und einen ersten Abschnitt (5a - 6) des Formgedächtnisdrahts (5) umfasst, und durch einen zweiten Schaltkreis (9b), der dieselbe Feder (7) und einen zweiten Abschnitt (6- 5b) des Formgedächtnisdrahts (5) umfasst, durchzuführen.

2. Bistabiler Schalter nach Anspruch 1, **dadurch gekennzeichnet, dass** die Formgedächtnisvorrichtung eine Vielzahl von Formgedächtnisdrähten umfasst, die dazwischen parallel angeordnet sind.

## Revendications

1. Actionneur bistable à mémoire de forme, comprenant un élément (3) monté de manière à être déplaçable sur une structure de support (2) et possédant une position intermédiaire de point mort et deux positions d'extrémité, et des moyens formant ressort (7) tendant à ramener l'élément mobile (3) vers l'une ou l'autre des positions d'extrémité, en fonction du fait qu'il se situe d'un côté ou de l'autre par rapport à la position de point mort, et des moyens à mémoire de forme (5,9) servant à provoquer un déplacement de l'élément mobile (3) à partir de l'une ou l'autre des positions d'extrémité, à l'encontre de l'action des moyens formant ressort (7) indiqués précédemment, au moins jusqu'à ce que la position de point mort soit dépassée,
dans lequel les moyens élastiques sont constitués par des moyens formant ressort (7) intercalés entre ledit élément mobile (3) et ladite structure de support fixe (2),
dans lequel l'élément mobile (3) est monté de manière à pouvoir tourner autour d'un axe de rotation (4) sur la structure de support (2), et les moyens formant ressort (7) indiqués précédemment sont constitués par un ressort hélicoïdal comportant une extrémité (8) raccordée à la structure de support (2) en un point distant de l'axe de rotation (4) de l'élément rotatif (3), et l'autre extrémité raccordée à l'élément rotatif (3) en un point (6) distant de l'axe de rotation (4),
dans lequel les moyens à mémoire de forme (5) comprennent au moins un fil à mémoire de forme et des moyens (9) pour envoyer un courant électrique dans ce fil,
dans lequel l'élément rotatif (3) se présente sous la forme d'une poulie et les deux extrémités (5a,5b) du fil à mémoire de forme (5) sont connectées à la structure de support fixe (2), et le fil est dévié autour de l'élément formant poulie (3), ledit fil à mémoire de forme (5) étant en outre raccordé rigidement à l'élément rotatif (3),
**caractérisé en ce que** les moyens d'amenée (9) sont appropriés pour envoyer sélectivement un courant électrique dans un premier circuit (9a) incluant le ressort (7) et un premier tronçon (5a-6) du fil à mémoire de forme (5), et un second circuit (9b) incluant le même ressort (7) et un second tronçon (6-5b) du fil à mémoire de forme (5).

2. Actionneur bistable selon la revendication 1, **caractérisé en ce que** lesdits moyens à mémoire de forme comprennent une pluralité de fils à mémoire de forme disposés parallèlement entre eux.
